(19) Europäisches Patentamt / European Patent Office / Office européen des brevets

(11) **EP 4 198 569 A1**

(12) **EUROPEAN PATENT APPLICATION**

(43) Date of publication:
**21.06.2023 Bulletin 2023/25**

(21) Application number: **21215899.2**

(22) Date of filing: **20.12.2021**

(51) International Patent Classification (IPC):
**G01S 17/87** $^{(2020.01)}$        **G01S 7/484** $^{(2006.01)}$
**G01S 7/481** $^{(2006.01)}$        **G01S 7/487** $^{(2006.01)}$

(52) Cooperative Patent Classification (CPC):
**G01S 17/87; G01S 7/4815; G01S 7/4817;
G01S 7/484;** G01S 7/4876; G01S 17/931

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aptiv Technologies Limited
St. Michael (BB)**

(72) Inventors:
• **RAINKO, Denis
  2 Dublin (IE)**
• **DIETZ, Roman
  2 Dublin (IE)**

(74) Representative: **Gaunt, Thomas Derrick et al
Lewis Silkin LLP
5 Chancery Lane
Clifford's Inn
London EC4A 1BL (GB)**

(54) **LIDAR DEVICE, SYSTEM AND METHOD**

(57)    A LIDAR device (31-34) having a sensor (30b) for detecting input signals and an emitter (30a) for emitting output signals. A controller (30c) controls the emitter (30a) to emit output signals and reads the input signals from the sensor (30b) during a plurality of scan cycles (41a-c). Each scan cycle is separated by a spacer period (42,43) and the controller is configured to vary the length of the spacer periods between the plurality of scan cycles. The LIDAR device may form part of a LIDAR system (3). Methods for reducing interference in a LIDAR system, and methods and software for controlling a LIDAR device are also disclosed.

Fig. 4a

EP 4 198 569 A1

## Description

## Introduction

The present disclosure relates to a LIDAR device, a system incorporating a plurality of such LIDAR devices, and associated methods of controlling the LIDAR device and reducing interference in a LIDAR system. The present disclosure is particularly relevant to automotive LIDAR devices and systems used in automotive applications.

## Background

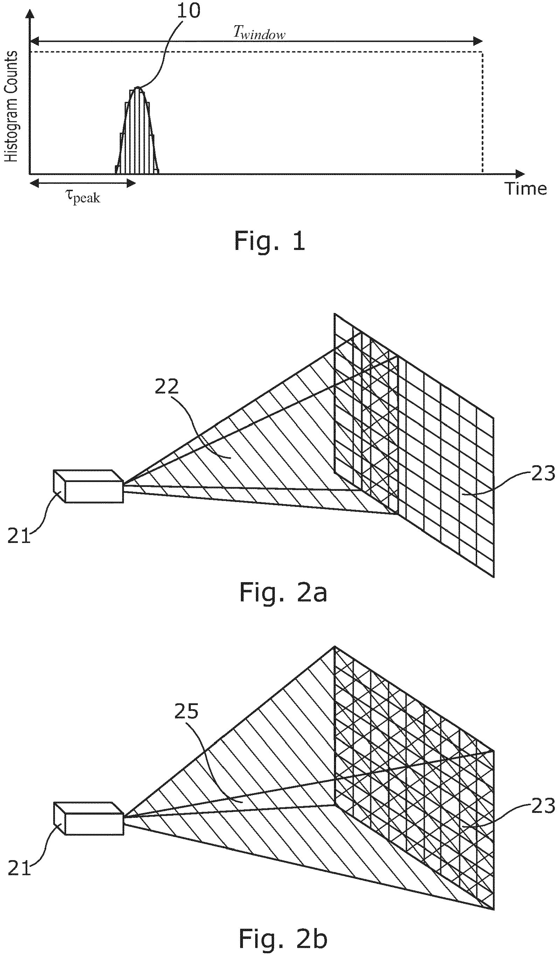

In recent years, sensors based upon Time-of-Flight (TOF) LIDAR (light detection and ranging) have become more widely used in automotive applications due to their ability to accurately measure objects at varying distances and obtain high angular resolution. With the increasing prevalence of autonomous driving, it is typical for such vehicles to feature one or more LIDAR devices, which may include an array of SPAD (single photon avalanche diode) devices. In order to measure the distance to an object, the field of view is illuminated several times over a plurality of scanning cycles to accumulate enough signals in each SPAD device. These illuminations are synchronised with the recording of reflected return light back to the sensor. As such, each SPAD device functions as a TOF sensor and is used to collect information about both the three-dimensional location and the intensity of the light incident on it in every frame. As part of this process, as illustrated in Figure 1, a histogram is effectively created for each SPAD device which records the timing of activations within a predefined timing window ($T_{window}$) for each cycle, with the histogram counts accumulated over the plurality of cycles. Thus, the distance to the object ($R_{obj}$) can be determined by measuring the mean return time ($\tau_{peak}$) of a detected peak 10 on the histogram:

$$R_{obj} = (c.\tau_{peak})/2$$

where c is the speed of light

Typically, LIDAR systems can be configured to operate using two different modes or architectures, namely scanning and flash. Figure 2a shows a scanning LIDAR architecture 21 in which the output light emitter, in this case a collimated laser beam 22, is operated to scan across the field of view 23, with the sensor recording the light reflected back column-by-column across the detector plane. Figure 2b shows the alternative flash LIDAR architecture in which the output light emitter, in this case a wide diverging laser beam 25, is operated to illuminate the entire field of view 23 in a single pulse by using a wide diverging laser beam 25. The sensor is then used to record reflected light back across the whole detector plane for each pulse.

A problem with conventional LIDAR systems, both using scanning and flash architectures, is that they can struggle to discriminate between an actual signal and interference from another LIDAR sensor which is emitting light pluses at the same wavelength. That is, it can be especially challenging to differentiate between detection peaks associated with a detected object and parasitic interference peaks originating from nearby LIDAR devices. Such parasitic signals can even potentially cover object signals in the resultant histogram count, thereby providing incorrect information about the surroundings.

To attempt to address the above, some LIDAR systems coordinate the timing windows of different LIDAR devices to decrease the probability of receiving parasitic signals. As such, a much longer measurement window is used, with this being sub-divided into several timing windows. However, such solutions are unsuitable for automotive applications because they slow the frame rate, and the ability to detect objects at short range required in driving scenarios necessitates very fast response times. Furthermore, the complexity of the architecture is also increased significantly, which increases costs.

Accordingly, there remains a need to address the above shortcomings in conventional LIDAR systems.

## Summary

According to a first aspect, there is provided a LIDAR device including a sensor for detecting input signals, an emitter for emitting output signals, and a controller for controlling the emitter to emit output signals and for reading the input signals from the sensor during a plurality of scan cycles, wherein each scan cycle is separated by a spacer period and the controller is configured to vary the length of the spacer periods between the plurality of scan cycles.

In this way, the LIDAR device may operate using a unique timing pattern by time shifting each cycle using a variable spacer. This thereby strongly decreases the systematic accumulation of interfering parasitic signals. That is, by changing the lengths of the spacer periods between scan windows, the probability of a respective device repeatedly receiving an emitted light signal at the same time within its scanning window from another LIDAR device in the same system is statistically decreased. Over a plurality of cycles, such parasitic signals will either fall outside of timing windows or, where they are captured, their counts will be distributed throughout the timing window. Accordingly, such parasitic signals will merely be rendered as an additional background noise on the noise floor, rather than a high intensity peak associated with a consistent parasitic signal. Furthermore, with such devices, it becomes possible to mitigate interference without requiring coordination between the scan cycles of multiple devices within a LIDAR system.

In embodiments, the controller is configured to set the length of each spacer period within a predetermined range. In this way, a variable time shift within a range of values may be applied to minimise synchronisation between different LIDAR devices.

In embodiments, the predetermined range has a minimum spacer period above 5 ns and/or a maximum spacer period of 100ns. In this way, the spacer period may be set such that is greater than the dead time of the LIDAR sensor, without unduly compromising the overall framerate of the resultant imaging.

In embodiments, the controller is configured to set the length of each spacer period to be different from the length of adjacent spacer periods. In this way, the varying lengths of the spacer periods may avoid following any perceptible repeating pattern, and thereby reduce the probability of repeatedly detecting an interfering signal occurring at a consistent pulse repetition frequency.

In embodiments, the controller is configured to randomly set the length of each spacer period. In this way, a randomised spacer period may ensure that there is no synchronisation between different LIDAR devices.

In embodiments, the sensor includes an array of pixels arranged in a plurality of lines and wherein the controller is configured to read each of the plurality of lines non-sequentially. In this way, the probability of interference from parasitic signals originating from scanning LIDAR devices is mitigated. In embodiments, the plurality of lines may be columns or rows of a detection matrix.

In embodiments, the controller is configured to randomly generate a line read order for each scan cycle, and wherein the controller is configured to read input signals from individual ones of the plurality of lines based on the line read order. In this way, by reading sensor columns or rows in a random order, the probability of interference from parasitic signals originating from scanning LIDAR devices is strongly mitigated.

In embodiments, the sensor is a Single-Photon Avalanche Diode (SPAD) array.

According to a second aspect, there is provided a LIDAR system including a plurality of LIDAR devices, each including an emitter for emitting output signals and a sensor for detecting input signals, one or more controllers for controlling each of the plurality of LIDAR devices to control their respective emitter and sensor during a plurality of scan cycles, where each scan cycle is separated by a spacer period, and wherein the one or more controllers vary the length of the spacer periods of at least one of the LIDAR devices such that the plurality of scan cycles for each of the plurality of LIDAR devices are out of phase. In this way, interference between different LIDAR devices within the same system may be mitigated.

In embodiments, the LIDAR system is an automotive LIDAR system. In this way, improved image resolution may be achieved without unduly compromising short-range detection speed.

According to a third aspect, there is provided a method for reducing interference in a LIDAR system, the method including the steps of controlling a respective emitter and sensor of each of a plurality of LIDAR devices to perform a respective plurality of scan cycles, where each scan cycle is separated by a spacer period, and varying the length of the spacer periods of least one of the LIDAR devices such that the plurality of scan cycles for each of the plurality of LIDAR devices are out of phase. In this way, a method is provided for strongly mitigating interference from parasitic signals.

In embodiments, the method further includes the steps of accumulating time of flight data for detected input signals over the plurality of scan cycles for each of the plurality of LIDAR devices, and noise filtering the accumulated time of flight data. In this way, an improved signal to noise ratio may be achieved for more accurate LIDAR detection.

According to a fourth aspect, there is provided a method for controlling a LIDAR device, the method including the steps of driving a plurality of scan cycles in which output signals from an emitter are coordinated with the reading input signals from a sensor, separating each scan cycle by a spacer period, and varying the length of the spacer periods between the plurality of scan cycles.

According to a fifth aspect, there is provided a computer program product including instructions which, when executed by a computer, cause the computer to control a LIDAR device carry out the steps of: driving a plurality of scan cycles in which output signals from an emitter are coordinated with the reading input signals from a sensor, separating each scan cycle by a spacer period, and varying the length of the spacer periods between the plurality of scan cycles.

In embodiments, the computer program product is stored on a non-transitory computer-readable medium.

According to a sixth aspect, there is provided a LIDAR device including a sensor that includes an array of pixels arranged in a plurality of lines, each for detecting input signals, and a controller for reading the input signals from each line of pixels, wherein the controller is configured to read each of the plurality of lines non-sequentially. In this way, the probability of interference from parasitic signals originating from scanning LIDAR devices is mitigated.

**Brief Description of Drawings**

Illustrative embodiments will now be described with reference to the accompanying drawings in which:

Figure 1 shows accumulated histogram counts of a single SPAD pixel over time;
Figure 2a shows an isometric view of a scanning LIDAR architecture;
Figure 2b shows an isometric view of a flash LIDAR architecture;
Figure 3 shows a schematic illustration of an automotive LIDAR system according to an illustrative embodiment;
Figure 4a shows a schematic illustration of a scanning sequence according to the illustrative embodiment;

Figure 4b shows a schematic illustration of an illustrative scenario where a parasitic signal is present during an illustrative scanning sequence; and

Figures 5a and 5b shows schematic illustrations of a detector matrix array readout order according to a second illustrative embodiment.

## Detailed Description

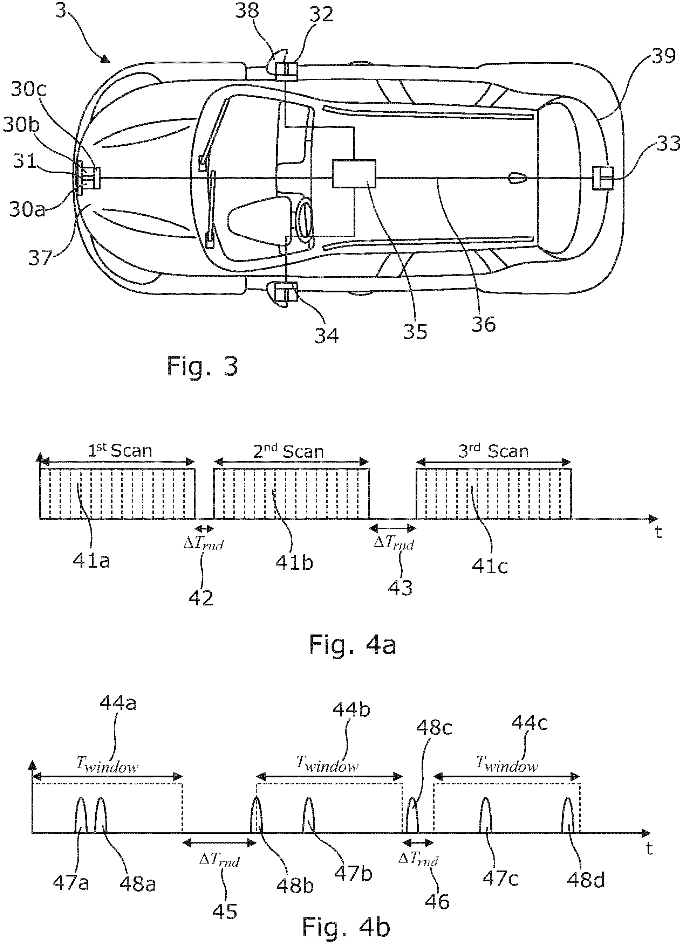

Figure 3 shows a schematic illustration of an automotive vehicular LIDAR system 3 according to an illustrative embodiment. The LIDAR system 3 includes a plurality of LIDAR devices 31-34 mounted around the vehicle, with devices mounted on the front 37 and rear 39 as well as the side wing mirrors 38. Each of the LIDAR devices 31-34 includes an emitter 30a, a sensor 30b, and a controller 30c. The system 3 also includes an electronic control unit 35 connected through a network of wiring 36 to each of the LIDAR devices.

It will be understood that different arrangements of LIDAR devices may be employed. For example, depending on the vehicle and system requirements, LIDAR devices may be mounted to the vehicle in different locations or alternative configurations.

In use, the controller 30c of each LIDAR device 31-34 controls its respective emitter 30a to emit a series of output signals or light pulses for illuminating the field of view of the respective LIDAR device. At the same time, the controller 30c synchronises the reading of detected reflected light onto the sensor 30b with the output light pulses. As such, each LIDAR device performs a plurality of scan cycles in which it emits an output light pulse and reads the reflected light as an input signal to determine ToF data. As described above in reference to Figure 1, the ToF data accumulated over a plurality of scan cycles is used to calculate the distance between each LIDAR device and objects in its respective field of view.

As is described in further detail below, the controllers 30c of each LIDAR device are configured to apply variable length spacer periods between each scan cycle. That is, after each scan cycle, the controller applies a variable period in which no scanning occurs. This thereby acts to shift the timing window of the next scan cycle so that the position of the timing windows do not follow a consistent frequency. As such, both the synchronised emit and read operations associated with each cycle are time shifted. In this embodiment, the controller is configured to vary the duration of the spacer periods randomly within a predetermined range. It will be understood that in other embodiments, the controller may alternatively apply a pseudo random sequence of spacer periods.

To explain the above further, Figure 4a illustrates a scanning sequence of three consecutive scan cycles 41a-c that take place over time t. Whilst the scan cycles 41a-c have the same duration, they are separated by spacer periods 42,43 which vary in length. In this illustrated example, the spacer period 42 between the first and second scan cycles is significantly less than spacer period 43 between the second and third. It will be understood that the pattern of scan cycles spaced by periods of different durations will continue for a plurality of further cycles.

Figure 4b shows a schematic illustration of an illustrative scenario where a parasitic signal having a regular pulse frequency is present during an illustrative scanning sequence. In this example, three consecutive scan cycles are shown, illustrated by timing windows 44a-c associated with the LIDAR device's sensor 30b. The scan cycles are separated again by spacer periods 45,46 which vary in length. As shown in the timing windows 44a-c, a first peak 47a-c appears at the same point in each timing window and hence can be identified as a signal of interest in that it corresponds to the output light pulse being reflected back from a detected object a set distance away from the sensor 30b. In contrast, the parasitic signal arising from another LIDAR device will produce a peak 48a-d which varies its position relative to each timing window 44a-c. That is, as the controller varies the length of each spacer period 45,46, the timing windows 44a-c are shifted relative to any externally generated signals. This shifting does not affect the target signal because this remains synchronised with the timing window 44a-c itself. Over time, the peaks 48a-d associated with the parasitic signal stemming from an interfering sensor are shifted across the timing window and in some instances arise outside the window. As such, they are effectively pushed out of the timing window. In this respect, it can be seen that in this example, the third parasitic peak 48c is completely outside of the timing windows 44a-c. In this way, when the sensor signals are accumulated within the histogram count, the parasitic signals are spread throughout the different time bins such that the they are perceivable only as an increased noise floor, rather than appearing as high intensity peaks. This noise may be filtered using conventional noise filtering within the controllers 30c or the electronic control unit 35. The above described devices and system thereby provide for interference generated by parasitic signals to be mitigated in both scanning and flash LIDAR architectures.

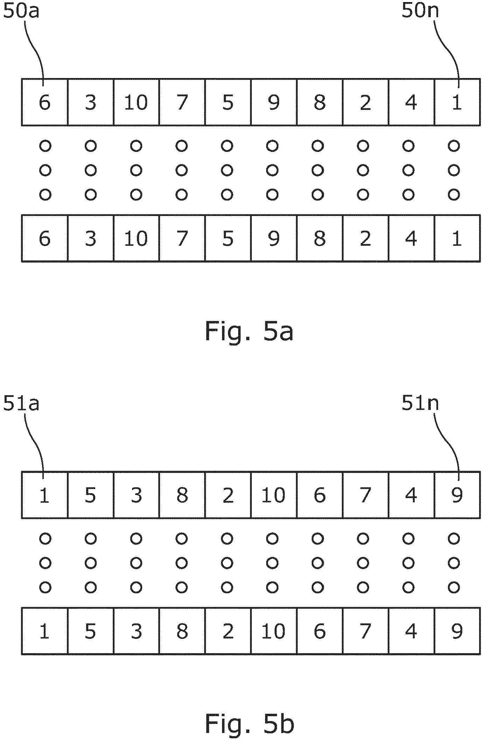

Figures 5a and 5b are used to describe a second embodiment of the invention, which operates to further mitigate interference in scanning LIDAR architectures. In this embodiment, in addition to the controller 30c varying the spacer periods between scan cycles, the controller 30c further randomises the scanning order of both the emitter 30a and the corresponding pixel lines on the sensor 30b within the LIDAR devices 31-34. That is, the sensor 30b includes an array of pixels arranged in a matrix having a plurality of rows and columns 50a-50n, as shown in Figure 5a. In this embodiment, the controller 30c is configured to read each of the plurality of columns non-sequentially during each scan cycle, with the corresponding column in the field of view being illuminated by the emitter 30a. For this, the controller may generate a randomised read order for each scan cycle, or may apply a pseudo random read order, for the columns. For instance, Figure 5a shows a first cycle, where the image frame is scanned beginning with the column on the far right. Figure 5b shows a read order for a second cycle where the image frame is scanned beginning with the column on the left. As such, the read order changes in each scan cycle. Accordingly, parasitic signals arising from interfering sensors within the LIDAR system as a whole are strongly mitigated. This is because the probability that the specific part of the sensor 30b is being actively read at the same time as an interfering signal is received on that portion of the sensor is decreased. That is, even in the presence of an interfering signal, the chances of this being synchronised with the scanning read order is reduced and, even where interfering signals are captured, the randomisation means that their accumulation in the histogram count will merely increase the noise level.

In this second embodiment, the variable read out order method is applied in combination with the variable spacer period method employed in the first embodiment. However, it will be understood that the variable read out order method may be used independently of the variable spacer period method in some arrangements.

With the above, an improved LIDAR device and associated methods may be provided, either alone or as part of a LIDAR system which includes a plurality of LIDAR devices. In particular, the problem of parasitic signals originating from other LIDAR devices interfering with signals of interest may be mitigated. This thereby allows for a more accurate system and method of LIDAR imaging.

It will be understood that the embodiments illustrated above show applications only for the purposes of illustration. In practice, embodiments may be applied to many different configurations, the detailed embodiments being straightforward for those skilled in the art to implement.

For example, it will be understood that embodiments may be implemented in combination with other monitoring systems, such as camera-based systems. In such arrangements, a camera may be directed to an corresponding or overlapping field of view as an associated LIDAR devices. The feeds from both devices may be combined to, for example, provide a video feed augmented with distance and other LIDAR derived information.

## Claims

1. A LIDAR device comprising:

   a sensor for detecting input signals;
   an emitter for emitting output signals;
   a controller for controlling the emitter to emit output signals and for reading the input signals from the sensor during a plurality of scan cycles,

   wherein each scan cycle is separated by a spacer period and the controller is configured to vary the length of the spacer periods between the plurality of scan cycles. ,

2. A LIDAR device according to claim 1, wherein the controller is configured to set the length of each spacer period within a predetermined range.

3. A LIDAR device according to claim 2, wherein the predetermined range has a minimum spacer period above 5 ns and/or a maximum spacer period of 100ns.

4. A LIDAR device according to any preceding claim, wherein the controller is configured to set the length of each spacer period to be different from the length of adjacent spacer periods.

5. A LIDAR device according to any preceding claim, wherein the controller is configured to randomly set the length of each spacer period.

6. A LIDAR device according to any preceding claim, wherein the sensor comprises an array of pixels arranged in a plurality of lines and wherein the controller is configured to read each of the plurality of lines non-sequentially.

7. A LIDAR device according to claim 6, wherein the controller is configured to randomly generate a line read order for each scan cycle, and wherein the controller is configured to read input signals from individual ones of the plurality of lines based on the line read order.

8. A LIDAR device according to any preceding claim, wherein the sensor is a Single-Photon Avalanche Diode, SPAD, array.

9. A LIDAR system comprising:

   a plurality of LIDAR devices, each comprising an emitter for emitting output signals and a sensor for detecting input signals;
   one or more controllers for controlling each of the plurality of LIDAR devices to control their respective emitter and sensor during a plurality of scan cycles, where each scan cycle is separated by a spacer period; and
   wherein the one or more controllers vary the length of the spacer periods of least one of the LIDAR devices such that the plurality of scan cycles for each of the plurality of LIDAR devices are out of phase.

10. A LIDAR system according to claim 9, wherein the LIDAR system is an automotive LIDAR system.

**11.** A method for reducing interference in a LIDAR system, the method comprising:

controlling a respective emitter and sensor of each of a plurality of LIDAR devices to perform a respective plurality of scan cycles, where each scan cycle is separated by a spacer period; and varying the length of the spacer periods of least one of the LIDAR devices such that the plurality of scan cycles for each of the plurality of LIDAR devices are out of phase.

**12.** A method according to claim 11, further comprising the step of:

accumulating time of flight data for detected input signals over the plurality of scan cycles for each of the plurality of LIDAR devices; and noise filtering the accumulating time of flight data.

**13.** A method for controlling a LIDAR device, the method comprising:

driving a plurality of scan cycles in which output signals from an emitter are coordinated with the reading input signals from a sensor; separating each scan cycle by a spacer period; and varying the length of the spacer periods between the plurality of scan cycles.

**14.** A computer program product comprising instructions which, when executed by a computer, cause the computer to control a LIDAR device carry out the steps of:

driving a plurality of scan cycles in which output signals from an emitter are coordinated with the reading input signals from a sensor; separating each scan cycle by a spacer period; and varying the length of the spacer periods between the plurality of scan cycles.

**15.** A LIDAR device comprising:

a sensor comprising an array of pixels arranged in a plurality of lines, each for detecting input signals; and a controller for reading the input signals from each line of pixels, wherein the controller is configured to read each of the plurality of lines non-sequentially.

Fig. 1

Fig. 2a

Fig. 2b

Fig. 3

1st Scan     2nd Scan     3rd Scan

$\Delta T_{rnd}$     $\Delta T_{rnd}$

41a     41b     41c

42     43

Fig. 4a

44a     44b    48c     44c

$T_{window}$     $T_{window}$     $T_{window}$

$\Delta T_{rnd}$     $\Delta T_{rnd}$

47a    48a     48b    47b     47c    48d

45     46

Fig. 4b

50a                                                    50n

| 6 | 3 | 10 | 7 | 5 | 9 | 8 | 2 | 4 | 1 |

O   O   O   O   O   O   O   O   O   O
O   O   O   O   O   O   O   O   O   O
O   O   O   O   O   O   O   O   O   O

| 6 | 3 | 10 | 7 | 5 | 9 | 8 | 2 | 4 | 1 |

Fig. 5a

51a                                                    51n

| 1 | 5 | 3 | 8 | 2 | 10 | 6 | 7 | 4 | 9 |

O   O   O   O   O   O   O   O   O   O
O   O   O   O   O   O   O   O   O   O
O   O   O   O   O   O   O   O   O   O

| 1 | 5 | 3 | 8 | 2 | 10 | 6 | 7 | 4 | 9 |

Fig. 5b

Europäisches
Patentamt

European
Patent Office

Office européen
des brevets

# EUROPEAN SEARCH REPORT

Application Number

EP 21 21 5899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2018 203584 A1 (BOSCH GMBH ROBERT [DE]) 12 September 2019 (2019-09-12) | 1-4,8-12 | INV. G01S17/87 |
| Y | * paragraphs [0024] - [0025]; figures 1,2 * <br> * paragraphs [0001], [0002], [0018] * <br> * paragraphs [0004], [0044], [0045], [0051] * | 5-7,13, 14 | G01S7/484 G01S7/481 G01S7/487 |
|  | ----- | | |
| Y | US 10 551 501 B1 (LUMINAR TECH INC [US]) 4 February 2020 (2020-02-04) <br> * column 33, lines 15-30; figure 18c * | 5 | |
|  | ----- | | |
| Y | US 2021/080544 A1 (SCHNITZER REINER [DE] ET AL) 18 March 2021 (2021-03-18) | 5-7,13, 14 | |
| A | * paragraphs [0048], [0049]; figure 1 * | 1-4,8-12 | |
|  | ----- | | |

TECHNICAL FIELDS
SEARCHED     (IPC)

G01S

~~The present search report has been drawn up for all claims~~

| Place of search | Date of completion of the search | Examiner |
|---|---|---|
| Munich | 14 June 2022 | Cortona, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

Europäisches
Patentamt

European
Patent Office

Office européen
des brevets

**Application Number**

**EP 21 21 5899**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-14

   LIDAR device comprising: a sensor detecting input signals; an emitter emitting output signals; a controller of the emitter, which also reads the input signals from the sensor during a plurality of scan cycles, wherein each scan cycle is separated by a spacer period, the length of the spacer periods varying between the scan cycles.
   ---

2. claim: 15

   LIDAR device comprising: a sensor with an array of pixels arranged in a plurality of lines, each for detecting input signals; and a controller reading the input signals from each line of pixels, wherein the plurality of lines is read non-sequentially.
   ---

## ANNEX TO THE EUROPEAN SEARCH REPORT
## ON EUROPEAN PATENT APPLICATION NO.

EP 21 21 5899

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2022

| Patent document cited in search report | Publication date | Patent family member(s) | Publication date |
|---|---|---|---|
| DE 102018203584 A1 | 12-09-2019 | DE 102018203584 A1 | 12-09-2019 |
| | | WO 2019170597 A1 | 12-09-2019 |
| US 10551501 B1 | 04-02-2020 | NONE | |
| US 2021080544 A1 | 18-03-2021 | CN 110720048 A | 21-01-2020 |
| | | DE 102017209643 A1 | 13-12-2018 |
| | | EP 3635437 A1 | 15-04-2020 |
| | | JP 6874165 B2 | 19-05-2021 |
| | | JP 2020522710 A | 30-07-2020 |
| | | KR 20200016930 A | 17-02-2020 |
| | | US 2021080544 A1 | 18-03-2021 |
| | | WO 2018224234 A1 | 13-12-2018 |

EPO FORM P0459

For more details about this annex : see Official Journal of the European Patent Office, No. 12/82